(19) **Europäisches Patentamt / European Patent Office / Office européen des brevets**

(11) **EP 4 067 950 B1**

(12) **FASCICULE DE BREVET EUROPEEN**

(45) Date de publication et mention de la délivrance du brevet:
**02.07.2025 Bulletin 2025/27**

(51) Classification Internationale des Brevets (IPC):
**G02B 5/18** *(2006.01)* **F21V 8/00** *(2006.01)*
**G02B 27/01** *(2006.01)* **G02B 6/00** *(2006.01)*

(21) Numéro de dépôt: **22164658.1**

(22) Date de dépôt: **28.03.2022**

(52) Classification Coopérative des Brevets (CPC):
**G02B 6/00; G02B 5/1847; G02B 5/1861;**
**G02B 27/0172;** G02B 2027/0114

(54) **GUIDE OPTIQUE ET PROCEDE DE FABRICATION CORRESPONDANT**

LICHTWELLENLEITER UND ENTSPRECHENDES HERSTELLUNGSVERFAHREN

OPTICAL GUIDE AND CORRESPONDING MANUFACTURING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2021 FR 2103209**

(43) Date de publication de la demande:
**05.10.2022 Bulletin 2022/40**

(73) Titulaire: **Optinvent**
**35700 Rennes (FR)**

(72) Inventeurs:
• **JULIEN, Simon**
**35700 RENNES (FR)**
• **SARAYEDDINE, Khaled**
**35700 RENNES (FR)**
• **LIU, Yao**
**35700 RENNES (FR)**

(74) Mandataire: **Cabinet Le Guen Maillet**
**3, impasse de la Vigie**
**CS 71840**
**35418 Saint-Malo Cedex (FR)**

(56) Documents cités:
WO-A2-2009/074638    US-A- 4 220 400
US-A1- 2012 002 294    US-A1- 2016 282 621
US-A1- 2016 313 557    US-B1- 8 384 999

EP 4 067 950 B1

# Description

## DOMAINE TECHNIQUE

La présente invention concerne le domaine de l'agencement de microstructures de guides optiques servant à extraire des images virtuelles injectées et transportées dans ces guides optiques.

## ETAT DE LA TECHNIQUE ANTERIEURE

Un guide optique est formé d'un matériau transparent (plastique, verre) et sert à transporter, par réflexions internes successives, des signaux lumineux constituant une image virtuelle injectée depuis une zone d'injection vers une zone d'extraction. De tels guides optiques sont typiquement utilisés aujourd'hui en réalité augmentée pour projeter, grâce à des lunettes adaptées appelées « lunettes informatives », pour fournir à un utilisateur des images virtuelles injectées dans le guide optique et fournies à l'utilisateur en superposition d'une vision d'une scène réelle vue à travers lesdites lunettes. Les images injectées sont dites « virtuelles » en ce sens qu'elles ne correspondent pas à la scène vue à travers les lunettes informatives.

L'image virtuelle à transporter est injectée dans le guide optique grâce à un dispositif de collimation accolé au guide au niveau de la zone d'injection. Le dispositif de collimation comporte une source lumineuse fournissant l'image virtuelle. La source lumineuse est par exemple de type LCoS (« Liquid Crystal on Silicon » en anglais), LCD (« Liquid Cristal Display » en anglais), OLED (« Organic Light-Emitting Diode » en anglais), μLED (« Micro Light Emitting Diode » en anglais) ou MOEMS (« Micro Opto Electro Mechanical System » en anglais). Le dispositif de collimation comporte en outre un système optique à base de lentilles, et éventuellement de miroirs, permettant de projeter cette image virtuelle sous forme d'un faisceau collimaté, qui est ensuite introduit dans le guide optique par la zone d'injection.

La zone d'extraction comporte un ensemble de microstructures constituant un réseau de réflecteurs semi-réfléchissants en surface du guide optique. Ces microstructures sont constituées de prismes ayant un angle adapté, permettant la sortie du faisceau lumineux du guide optique vers l'œil d'un utilisateur.

Un agencement semblable est présenté dans le document de brevet WO 2009/074638 A1. Dans le même principe, la **Fig. 1** illustre schématiquement un agencement, où un ensemble de microstructures juxtaposées forment une zone d'extraction de guide optique. Y est présentée une portion de guide optique 100 comportant des microstructures 101 formant un réseau de réflecteurs semi-réfléchissants en surface du guide optique. Ces microstructures 101 sont des prismes en creux et en saillie, et sont constituées d'une alternance de surfaces 103 et 102 inclinées par rapport à la face opposée du guide optique. Les surfaces 103 forment conjointement, grâce à un dépôt (« coating » en anglais) semi-réfléchissant, la surface d'extraction des images virtuelles injectées dans le guide optique, c'est-à-dire le réseau de réflecteurs susmentionné. On parle ici de surfaces actives A. Les surfaces 102 forment conjointement la surface transparente permettant l'effet de vision à travers (« see-through » en anglais). On parle ici de surfaces passives B.

Il est aussi connu le document de brevet US 2016/0313557 A1 qui divulgue un dispositif optique comprenant un élément de Fresnel réfléchissant. Il est aussi connu le document de brevet US 2012/002294 A1 qui divulgue un dispositif optique de combinaison d'un premier faisceau avec un second faisceau qui n'est pas parallèle au premier faisceau, de sorte à former un faisceau combiné.

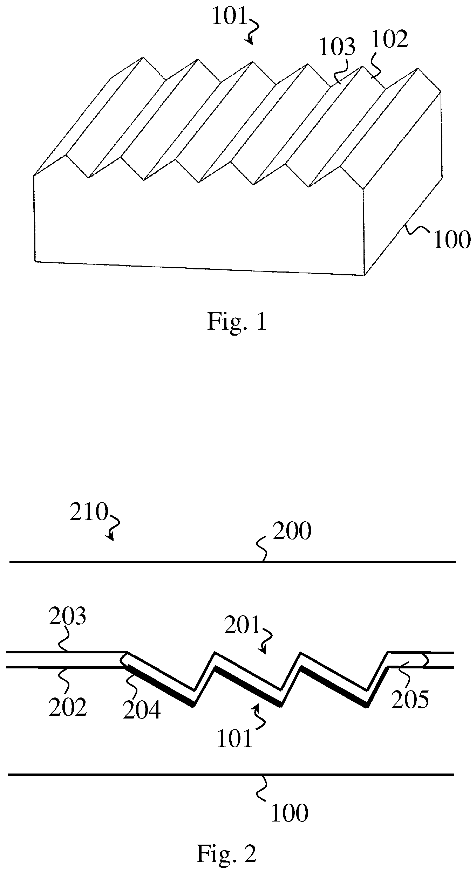

Un autre agencement permettant d'obtenir l'effet de vision à travers est présenté dans le document de brevet WO 2012/136470 A1. Cela permet de voir l'image virtuelle transportée par le faisceau lumineux en superposition de la scène au-delà du guide optique. La vision de la scène à travers est notamment permise par le caractère semi-réfléchissant du réseau de réflecteurs. Cet agencement comporte une première pièce 100 de guide optique comportant en surface des microstructures 101 en substance selon le schéma de la Fig. 1. L'agencement décrit introduit une deuxième pièce 200 du guide optique, aussi appelée « pièce de couverture » (« cover piece » en anglais), comportant en surface des microstructures 201 de forme complémentaire aux microstructures 101 de ladite section d'extraction, comme schématiquement illustré sur la **Fig. 2.** Y apparaît le dépôt semi-réfléchissant 204 évoqué ci-avant. De plus, une couche de colle 205 s'étend entre les microstructures 101 et 201, de sorte que toute microstructure 101 de ladite section d'extraction est séparée de sa microstructure complémentaire 201 par un milieu transparent d'épaisseur substantiellement constante.

Les microstructures de tels guides optiques peuvent être fabriquées par usinage, mais sont généralement fabriquées grâce à une technique de moulage par injection plastique (« injection molding » en anglais), de moulage par injection et compression (« compression injection molding » en anglais), de formage à chaud (« hot embossing » en anglais) ou enfin par une technique de formage thermique, ou de formage par rayonnement ultraviolet, de monomères. Pour cela, une empreinte (aussi appelée « insert ») métallique (par exemple en acier ou en aluminium) est fabriquée avec la forme négative de la structure du guide optique, afin de servir de moule (après typiquement application d'une couche de Nickel Phosphore pour les empreintes en acier). La fabrication de ce type d'insert doit se faire avec des méthodes très précises pour limiter au maximum les irrégularités de surface. Certaines applications impliquent des tolérances en dimensions de formes de surface bien inférieures à la longueur d'onde guidée λ (par exemple, inférieure à λ/5) et aussi une rugosité très faible (par exemple, inférieure à 10 nm), afin d'avoir une bonne netteté d'image virtuelle projetée. Aussi, les surfaces semi-réfléchissantes des microstructures, dont le rôle est d'extraire l'image vers l'œil d'un utilisateur du guide optique, doivent être précisément réalisées. En effet, l'image virtuelle guidée dans le guide optique par réflexions totales internes successives est collimatée à l'infini. Chaque pixel de l'image étant transporté par un pinceau de rayons lumineux parallèles entre eux, l'image virtuelle est donc guidée sous la forme de rayons lumineux parallèles.

Aujourd'hui, les guides optiques projettent l'image virtuelle à l'infini. En effet, si l'image virtuelle transportée n'est pas collimatée à l'infini, alors différents champs la composant traversent le guide optique avec un nombre de réflexions internes successives différent. Alors, les champs se mélangent et la partie de l'image virtuelle des pixels correspondants est brouillée.

La projection d'images virtuelles collimatées à l'infini répond à certaines applications, mais ne correspond cependant pas à tous les besoins utilisateur. Plus particulièrement, pour pouvoir interagir correctement avec le contenu de l'image virtuelle projetée (par exemple, à longueur de bras), il est souhaitable de projeter cette image virtuelle à une distance finie en sortie du guide optique. De plus, dans le cas de lunettes binoculaires de réalité augmentée, une image projetée à l'infini engendre un conflit connu sous le nom de convergence-accommodation (« vergence-accommodation » en anglais). Pour éviter ce conflit, il est souhaitable que la vision œil droit et la vision œil gauche convergent à une distance finie, appelée « *distance de convergence* ». Cette distance de convergence est généralement inférieure à 2 mètres. Il est aussi souhaitable que la mise au point soit faite à courte distance pour améliorer la netteté de l'image virtuelle en superposition à une scène réelle proche. Ceci n'est évidemment pas possible avec une image virtuelle projetée à l'infini.

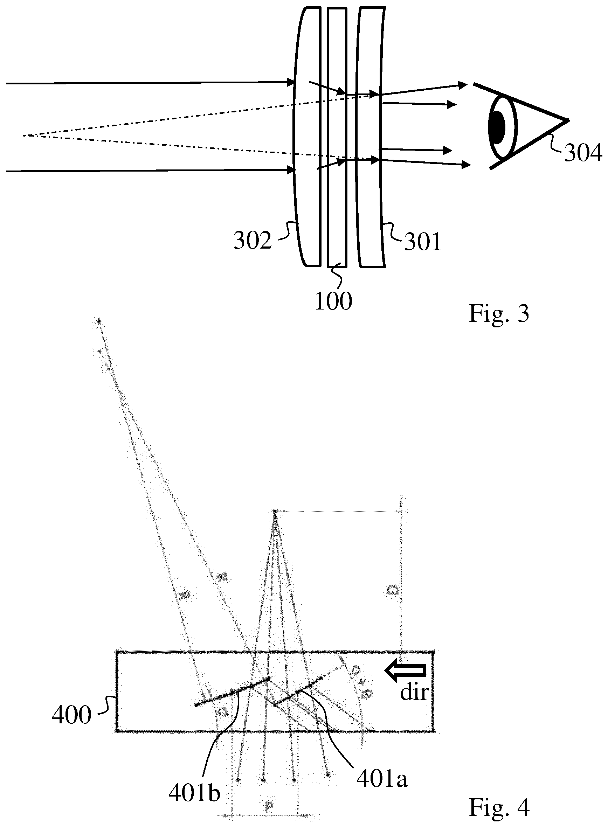

Dans l'état de l'art existant, pour projeter l'image virtuelle à une distance finie, typiquement une courte distance de 1 à 10 mètres, une lentille négative 301 est adjointe au guide optique 100 et placée en sortie de la zone d'extraction, donc du côté de l'œil de l'utilisateur 304, pour rapprocher l'image virtuelle. De plus, une lentille positive 302 de même puissance est adjointe de l'autre côté du guide optique 100 par rapport à la lentille négative 301, et dans l'axe de cette dernière. La lentille positive 302 compense ainsi la lentille négative 301 afin que la vision du monde réel à travers le guide optique ne soit pas déformée. L'agencement correspondant est schématiquement illustré sur la **Fig. 3.** Un inconvénient est que l'ajout de ces lentilles augmente l'encombrement et le poids, et peut provoquer un gène chez l'utilisateur.

Il est souhaitable de fournir une solution qui permette de répondre totalement ou partiellement aux inconvénients de l'état de la technique mentionnés ci-dessus. Il est aussi souhaitable de fournir une solution qui soit simple à réaliser et à faible coût.

## EXPOSE DE L'INVENTION

Un objet de la présente invention est de proposer un guide optique comportant une première pièce dans un matériau transparent, la première pièce comportant en surface un réseau de microstructures d'extraction composé d'une succession de microstructures d'extraction agencées pour projeter à une distance finie D une image virtuelle injectée dans le guide optique, chaque microstructure d'extraction ayant une forme prismatique à deux faces, une face étant appelée surface active et disposant d'un dépôt semi-réfléchissant pour extraire l'image virtuelle du guide optique et l'autre face étant appelée surface passive et ne disposant d'aucun dépôt semi-réfléchissant, caractérisé en ce que chaque surface active est sphérique et a une inclinaison plus faible d'un angle moyen θ que l'éventuelle surface active immédiatement précédente dans la succession de microstructures selon la direction de propagation de l'image virtuelle dans le guide optique. Ainsi, une solution directement intégrée au guide optique est proposée, de manière compacte, sans ajout de lentilles. La fabrication s'en trouve en outre simplifiée (assemblage limité).

Le guide optique est tel que :

$$\theta = \arctan \left( P / D \right) / (2 * n)$$

et chaque surface active a un rayon de courbure R tel que :

$$R = 2 * n * D$$

où P est une période de répétition des microstructures du réseau de microstructures d'extraction et n est un indice de réfraction du matériau transparent.

Selon un mode de réalisation particulier, le guide optique comporte en outre une deuxième pièce, dite pièce de couverture, dans le même matériau transparent que la première pièce, la deuxième pièce comportant des microstructures agencées pour prendre place dans des espaces entre les microstructures de la première pièce, la deuxième pièce étant collée à la première pièce de sorte à former un guide optique à deux faces parallèles.

Selon un mode de réalisation particulier, la deuxième pièce présente en surface des microstructures de formes complémentaires à celles des microstructures de la première pièce, avec une épaisseur de colle substantiellement constante.

Selon un mode de réalisation particulier, la deuxième pièce présente en surface des microstructures formant un autre réseau de microstructures d'extraction qui comporte une autre succession de microstructures d'extraction ayant des surface actives disposant d'un dépôt semi-réfléchissant et agencées pour projeter l'image virtuelle à une distance D' autre que la distance D.

Selon un mode de réalisation particulier, la distance D' est finie et chaque surface active des microstructures de cet autre réseau de microstructures d'extraction est sphérique et a une inclinaison plus faible d'un angle moyen θ' que l'éventuelle surface active immédiatement précédente dans la succession de microstructures selon la direction de propagation de l'image virtuelle dans le guide optique.

En variante, la distance D' est infinie.

Selon un mode de réalisation particulier :

- le dépôt semi-réfléchissant des surfaces actives de la première pièce est sensible à une polarisation spécifique et le dépôt semi-réfléchissant des surfaces actives de la deuxième pièce est sensible à une autre polarisation spécifique ; ou
- le dépôt semi-réfléchissant des surfaces actives de la première pièce est sensible à une longueur d'onde spécifique et le dépôt semi-réfléchissant des surfaces actives de la deuxième pièce est sensible à une autre longueur d'onde spécifique ; ou
- le dépôt semi-réfléchissant des surfaces actives de la première pièce est sensible à une bande spectrale spécifique et le dépôt semi-réfléchissant des surfaces actives de la deuxième pièce est sensible à une autre bande spectrale spécifique.

Selon un mode de réalisation particulier, la première pièce comporte en outre en surface un réseau de microstructures de multiplication bidimensionnelle de pupille placé entre une zone d'injection par laquelle l'image virtuelle à projeter est injectée dans le guide optique et le réseau de microstructures d'extraction, les microstructures de multiplication bidimensionnelle de pupille comportant des surfaces actives sous forme de plans inclinés disposant d'un dépôt semi-réfléchissant et les autres surfaces étant des surfaces passives ne disposant d'aucun dépôt semi-réfléchissant, les microstructures de multiplication bidimensionnelle de pupille étant placées en oblique par rapport aux microstructures d'extraction de sorte à réfléchir un rayon lumineux de l'image virtuelle transportée qui frappe une ou plusieurs de ses surfaces actives vers le réseau de microstructures d'extraction.

Selon un mode de réalisation particulier, la première pièce dispose d'un dépôt semi-réfléchissant entre la zone d'injection et le réseau de microstructures de multiplication bidimensionnelle de pupille, ainsi qu'entre le réseau de microstructures de multiplication bidimensionnelle de pupille et le réseau de microstructures d'extraction.

Il est aussi proposé un dispositif de projection d'images comportant un guide optique tel que mentionné ci-dessus dans l'un quelconque de ses modes de réalisation et un dispositif de collimation fournissant une image virtuelle collimatée à l'infini, le dispositif de collimation et le guide optique étant assemblés de sorte que l'image virtuelle fournie par le dispositif de collimation est injectée dans le guide optique et projetée à la distance D par le réseau de microstructures d'extraction.

Il est aussi proposé un système de réalité augmentée comportant au moins un tel dispositif de projection d'images.

Il est aussi proposé un procédé de fabrication d'un guide optique, comportant les étapes suivantes :

- fabriquer une première pièce dans un matériau transparent, la première pièce comportant en surface un réseau de microstructures d'extraction composé d'une succession de microstructures d'extraction agencées pour projeter à une distance finie D une image virtuelle injectée dans le guide optique, chaque microstructure d'extraction ayant une forme prismatique à deux faces, une face étant appelée surface active pour extraire l'image virtuelle du guide optique et l'autre face étant appelée surface passive, chaque surface active étant sphérique et ayant une inclinaison plus faible d'un angle moyen θ que l'éventuelle surface active immédiatement précédente dans la succession de microstructures selon la direction de propagation de l'image virtuelle dans le guide optique ;
- appliquer un traitement semi-réfléchissant sur les surface actives, en excluant les surfaces passives.

Le procédé de fabrication est tel que :

$$\theta = \arctan ( P / D ) / (2 * n)$$

et chaque surface active a un rayon de courbure R tel que :

$$R = 2 * n * D$$

où P est une période de répétition des microstructures du réseau de microstructures d'extraction et n est un indice de réfraction du matériau transparent.

Selon un mode de réalisation particulier, le procédé est tel que la première pièce comporte en outre en surface un réseau de microstructures de multiplication bidimensionnelle de pupille placé entre une zone d'injection par laquelle l'image virtuelle à projeter est injectée dans le guide optique et le réseau de microstructures d'extraction, les microstructures de multiplication bidimensionnelle de pupille comportant des surfaces actives sous forme de plans inclinés et les autres surfaces étant des surfaces passives, les microstructures de multiplication bidimensionnelle de pupille étant placées en oblique par rapport aux microstructures d'extraction de sorte à réfléchir un rayon lumineux de l'image virtuelle transportée qui frappe une ou plusieurs de ses surfaces actives vers le réseau de microstructures d'extraction ;

et le procédé comporte en outre l'étape suivante :

- appliquer un traitement semi-réfléchissant sur les surface actives des microstructures de multiplication bidimensionnelle de pupille, en excluant les surfaces passives.

Selon un mode de réalisation particulier, le procédé comporte en outre les étapes suivantes :

- fabriquer une deuxième pièce, dite pièce de couverture, dans le même matériau transparent que la première pièce, la deuxième pièce comportant des microstructures agencées pour prendre place dans des espaces entre les microstructures de la première pièce ;
- coller la première pièce et la deuxième pièce ensemble de sorte à former un guide optique à deux faces parallèles.

## BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

- [Fig. 1] illustre schématiquement des microstructures d'extraction dans une zone d'extraction d'un guide optique, selon l'état de la technique ;
- [Fig. 2] illustre schématiquement un autre agencement de zone d'extraction de guide optique, selon l'état de la technique ;
- [Fig. 3] illustre schématiquement un agencement de focalisation à courte distance d'une image injectée dans un guide optique et qui y en est extraite grâce aux microstructures de la Fig. 1 ou 2, selon l'état de la technique ;
- [Fig. 4] illustre schématiquement, en vue en coupe simplifiée, des orientations de surfaces actives de microstructures d'extraction de guide optique, selon l'invention ;
- [Fig. 5] illustre schématiquement un guide optique comportant un réseau de microstructures d'extraction complété par un réseau de microstructures de multiplication bidimensionnelle de pupille ;
- [Fig. 6] illustre schématiquement un guide optique adapté à des lunettes informatives ;
- [Fig. 7] illustre schématiquement une vue en coupe simplifiée du réseau de microstructures d'extraction et du réseau de microstructures de multiplication bidimensionnelle de pupille ;
- [Fig. 8] illustre schématiquement un agencement permettant d'extraire des images à deux distances différentes ; et
- [Fig. 9] illustre schématiquement un procédé de fabrication d'un dispositif optique.

## EXPOSE DETAILLE DE MODES DE REALISATION

La **Fig. 4** illustre schématiquement, en vue en coupe simplifiée, des orientations de surfaces actives de microstructures de zone d'extraction d'un guide optique 400, selon l'invention. Les microstructures de la zone d'extraction sont dénommées ici « microstructures d'extraction ». La Fig. 4 symbolise le guide optique 400 avec une première pièce comportant en surface les microstructures d'extraction. Cette première pièce est collée à une deuxième pièce, aussi appelée « pièce de couverture », comportant en surface des microstructures complémentaires, selon le principe général divulgué dans le document de brevet WO 2012/136470 A1. A titre illustratif, seulement deux surfaces actives de microstructures sont montrées sur la Fig. 4.

Le guide optique 400 est agencé de telle sorte que, lorsqu'un dispositif de collimation lui est associé selon les recommandations d'utilisation, les rayons de l'image virtuelle, qui est fournie par le dispositif de collimation et qui est injectée par la zone d'injection, parcourent le guide optique 400 en réflexions totales internes jusqu'à la zone d'extraction (de droite à gauche, selon la direction de propagation « dir » sur la Fig. 4). Les surface actives des microstructures d'extraction de ladite première pièce du guide optique 400 sont des surfaces semi-réfléchissantes sphériques de même rayon de courbure R. Les surfaces actives des microstructures d'extraction de ladite première pièce du guide optique 400 sont préférentiellement des surfaces concaves, c'est-à-dire en creux en surface de la première pièce du guide optique 400. Une projection à une distance négative pour compenser une hypermétropie est aussi réalisable en utilisant des surfaces convexes.

Comme les rayons de l'image virtuelle sont collimatés à l'infini en sortie du dispositif de collimation, ces rayons sont donc tous parallèles pour chaque champ de l'image virtuelle transportée. En utilisant une surface 401a semi-réfléchissante sphérique de rayon R inclinée dans le guide optique 400, une partie de l'image est extraite du guide optique 400 et est projetée à une distance D de la surface du guide optique 400. En considérant une autre surface 401b semi-réfléchissante sphérique de rayon R inclinée dans le guide optique 400, une autre partie de l'image est extraite du guide optique et est projetée à la distance D de la surface du guide optique 400. Et ainsi de suite pour extraire l'ensemble de l'image virtuelle et la projeter à la distance D de la surface du guide optique 400 grâce au réseau de microstructures d'extraction. Le réseau de microstructures d'extraction présente une période (ou « pas », « pitch » en anglais) de répétition P (une microstructure toutes les périodes P). Les surfaces actives de la zone d'extraction sont ainsi des surfaces semi-réfléchissantes sphériques qui sont agencées de telle sorte que l'image virtuelle d'un point, ou d'un pixel, porté par les rayons extraits du guide optique 400 par les surfaces semi-réfléchissantes (comme symboliquement illustré sur la Fig. 4) focalisent en un seul point situé à la distance D de la surface du guide. Pour ce faire, l'inclinaison de chaque surface active est plus faible d'un angle moyen θ que l'éventuelle surface active immédiatement précédente dans la succession de microstructures (dans le sens de propagation « dir » sur la Fig. 4). Ainsi, la dernière microstructure en séquence (dans le sens de propagation « dir » sur la Fig. 4) a un profil qui forme un angle moyen α avec la direction de propagation de l'image transportée dans le guide optique 400, l'avant-dernière microstructure en séquence a un profil qui forme un angle moyen α + θ avec la direction de propagation de l'image transportée... Autrement dit, en considérant un réseau de microstructures d'extraction présentant M microstructures, la i-ième microstructure en séquence dans le sens de propagation de l'image transportée (dans le sens de propagation « dir » sur la Fig. 4) a un profil qui forme un angle moyen α + (M - i) * θ, avec i = 1,...,M, avec la direction de propagation de l'image transportée.

Ainsi, pour projeter l'image virtuelle à une distance D du guide optique, les microstructures sont agencées de telle sorte que les relations suivantes sont respectées :

$$R = 2 * n * D$$

$$\theta = \arctan ( P / D ) / (2 * n)$$

où $n$ est l'indice de réfraction du matériau constitutif de la première pièce et qui est égal à celui de la deuxième pièce du guide optique 400.

Cet agencement permet l'extraction de l'image virtuelle injectée dans le guide optique 400 à une distance finie (représentée par D). L'agencement présenté fait fonction de lentille négative faisant diverger le faisceau de l'image virtuelle extraite afin de projeter cette image virtuelle à une distance finie (représentée par D) lorsqu'elle rentre dans l'œil, à la manière d'une lentille ophtalmique (verre de lunette), mais offre avantageusement une solution intégrée au guide optique (sans ajout de lentille). Dans cet agencement, uniquement l'image virtuelle extraite est placée à distance finie, les rayons issus de l'effet de vision à travers ne faisant que traverser le guide optique 400 et n'étant pas déviés par l'agencement proposé.

L'angle α est fixé par les conditions de guidage optique, notamment le placement et les caractéristiques attendues du dispositif de collimation injectant l'image virtuelle de sorte que l'ensemble de l'image virtuelle soit guidé par réflexions totales internes dans le guide optique jusqu'au réseau de microstructures d'extraction.

A titre d'exemple de réalisation, pour fournir un guide optique qui focalise l'image virtuelle extraite à une distance D égale à 2 mètres dans l'air, en considérant que l'indice de réfraction n du matériau constituant la première pièce du guide optique 400 et du matériau constituant la deuxième pièce du guide optique 400 est égal à 1,6, alors le rayon R est de 6,4 mètres, l'angle θ est égal à 0,014 degrés, pour une période de répétition P égale à 1,6 millimètre.

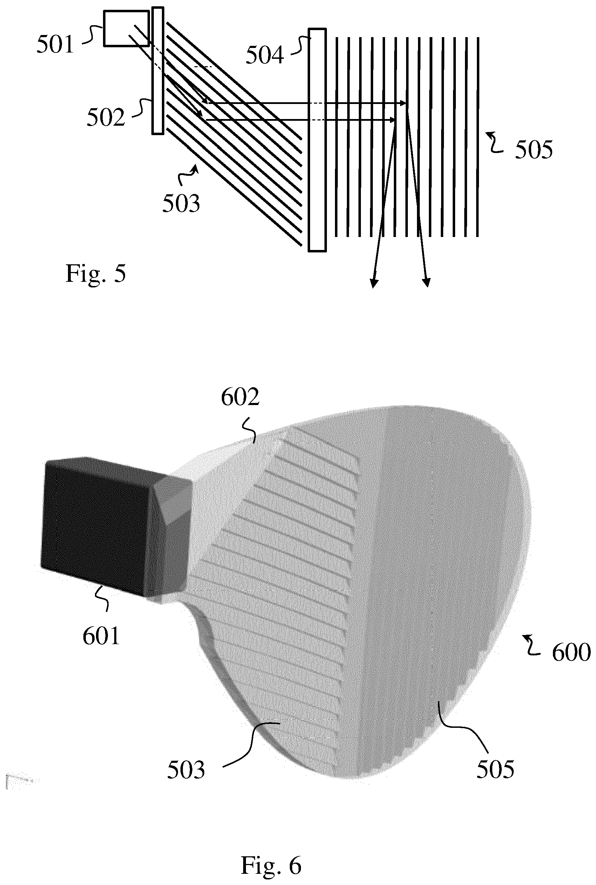

De manière à réduire les dimensions de la zone d'injection, aussi appelée « pupille d'entrée du guide optique 400 », et de réduire en conséquence l'encombrement du dispositif de collimation, le guide optique peut inclure un autre réseau de microstructures, dites microstructures de multiplication bidimensionnelle de pupille. Ce réseau de microstructures de multiplication bidimensionnelle de pupille est présent entre la pupille d'entrée et le réseau de microstructures d'extraction, c'est-à-dire entre la zone d'injection et la zone d'extraction. Le réseau de microstructures de multiplication bidimensionnelle de pupille comporte des surfaces planes et parallèles entre elles, agencées pour élargir le faisceau transportant l'image virtuelle collimatée à l'infini avant extraction à distance finie par les microstructures d'extraction. L'agencement est schématiquement illustré sur la **Fig. 5,** où est représentée la zone d'injection 501 où le faisceau d'entrée est injecté dans une section de cette zone qui représente la pupille d'entrée du guide, c'est dire l'endroit où tous les champs traversent cette zone, chacun avec son angle d'incidence propre.

L'agencement de la Fig. 5 comporte un réseau de microstructures d'extraction 505, agencées comme précédemment décrit en relation avec la Fig. 4. Les microstructures comportent donc des surfaces sphériques dont les inclinaisons coordonnées permettent une extraction, à une distance finie D du guide optique, d'une image injectée dans une zone d'injection 501 du guide optique.

L'agencement de la Fig. 5 comporte en outre un réseau de microstructures de multiplication bidimensionnelle de pupille 503 pour multiplier la taille du faisceau d'image par rapport à celle de la pupille d'entrée. Les microstructures de multiplication bidimensionnelle de pupille ont une forme prismatique à surfaces planes. Chaque microstructure de multiplication bidimensionnelle de pupille comporte une surface active en forme de plan incliné avec dépôt semi-réfléchissant, et une surface passive sans ce dépôt semi-réfléchissant. Les microstructures de multiplication bidimensionnelle de pupille sont agencées en oblique par rapport aux microstructures d'extraction de sorte que le faisceau d'image réfléchi par les surfaces actives des microstructures de multiplication bidimensionnelle de pupille est transmis vers les microstructures d'extraction. Chaque rayon transportant l'image virtuelle frappe ainsi une ou plusieurs surfaces actives et est transmis vers les microstructures d'extraction.

Entre le réseau de microstructures de multiplication bidimensionnelle de pupille 503 et le réseau de microstructures d'extraction 505, le guide optique comporte optionnellement en surface un dépôt de couche semi-réfléchissante 504, ayant par exemple un rapport transmission/réflexion de 50%. Cet agencement particulier optionnel est avantageux lorsque la pièce de couverture est en place. Le dépôt de couche semi-réfléchissante 504 se trouve alors situé au milieu de l'épaisseur du guide optique et permet de doubler le faisceau en entrée du réseau de microstructures d'extraction 505.

Entre la zone d'injection 501 et le réseau de microstructures de multiplication bidimensionnelle de pupille 503, le guide optique comporte en surface un dépôt de couche semi-réfléchissante 502, ayant par exemple un rapport transmission/réflexion de 50%. Cet agencement particulier optionnel est avantageux lorsque la pièce de couverture est en place. Le dépôt de couche semi-réfléchissante 502 se trouve alors situé au milieu de l'épaisseur du guide optique et permet de doubler le faisceau en entrée du réseau de microstructures de multiplication bidimensionnelle de pupille 503 et donc de réduire les dimensions du dispositif de collimation.

Ainsi, une fois l'image virtuelle injectée dans le guide optique, les champs qui la composent (chacun avec une direction donnée) traversent une zone du guide optique qui comporte le dépôt de couche semi-réfléchissante 502. Chaque faisceau incident génère alors deux faisceaux (l'un est transmis à travers le dépôt de couche semi-réfléchissante 502 et l'autre est réfléchi par ce dépôt de couche semi-réfléchissante 502). Cette technique est décrite plus en détails dans le brevet EP 2791717 B1 et permet ainsi de remplir le guide optique.

Les rayons transportant l'image virtuelle se propagent dans le guide optique par réflexions totales internes et sont partiellement réfléchis par le réseau de microstructures de multiplication bidimensionnelle de pupille 503. Cela permet de générer une multitude de faisceaux réfléchis, chacun par une ou plusieurs surfaces actives du réseau de microstructures de multiplication bidimensionnelle de pupille 503, ce qui a pour effet un élargissement de section vis-à-vis de la pupille d'entrée de la zone d'injection 501. Tous les faisceaux peuvent ainsi ne pas atteindre la zone du guide optique qui comporte le dépôt de couche semi-réfléchissante 504 et sont donc perdus (ils n'atteignent pas la boîte à œil).

Le dépôt de couche semi-réfléchissante 504 se trouve situé au milieu de l'épaisseur du guide optique, ce qui permet une fois encore un doublement de faisceau. Ce deuxième doublement de faisceau assure une meilleure uniformité de champ, en remplissant des zones du guide optique qui, sinon, seraient non pourvues de faisceau lumineux.

Le réseau de microstructures d'extraction 505 permet ensuite une extraction vers l'extérieur, grâce à la réflexion sur ses surfaces actives, de l'image virtuelle transportée, afin de former une image correspondante dans l'œil de l'utilisateur.

La **Fig. 6** illustre schématiquement un dispositif de projection d'images 600 adapté à des lunettes informatives (réalité virtuelle), comportant un guide optique 602 permettant une extraction à une distance finie d'une image injectée, en superposition avec une scène réelle vue à travers le guide optique 602. Le dispositif de projection d'images 600 permet à la fois de projeter une image virtuelle à une distance finie (D) et d'offrir un effet de vision à travers (« see-through » en anglais). Le dispositif de projection d'images 600 s'intègre aisément dans une monture de lunettes informatives, la Fig. 6 illustrant schématiquement un dispositif de projection d'images 600 adapté pour prendre place en tant qu'optique (carreau) œil droit de lunettes informatives.

Le guide optique comporte une première pièce en matériau transparent, en verre ou en plastique, agencée comme présenté sur la Fig. 5. Le matériau utilisé est par exemple un plastique transparent de haut indice de réfraction *nd* (par exemple, *nd* > 1.6).

Notamment, le réseau de microstructures de multiplication bidimensionnelle de pupille 503 et le réseau de microstructures d'extraction 505 sont présents en surface de cette première pièce. Par exemple, le réseau de microstructures de multiplication bidimensionnelle de pupille 503 et le réseau de microstructures d'extraction 505 sont obtenus par moulage par injection plastique ou par usinage, en utilisant par exemple une pointe diamant.

Sur la première pièce, des dépôts semi-réfléchissants sont présents sur les surfaces actives des microstructures d'extraction, ainsi qu'entre le réseau de microstructures de multiplication bidimensionnelle de pupille 503 et le réseau de microstructures d'extraction 505, et entre une zone d'injection où est accolé un dispositif de collimation 601 et le réseau de microstructures de multiplication bidimensionnelle de pupille 503. Ces dépôts permettent d'obtenir une semi-transparence pour l'effet de vision à travers (« see-through » en anglais).

Le faisceau de l'image est formé par le dispositif de collimation qui est accolé au guide optique au niveau de sa zone d'injection. L'image à injecter est ainsi collimatée à l'infini sur un champ total de 50 degrés, par exemple. Ce faisceau est injecté dans le guide optique par exemple à travers un prisme d'injection, qui fait préférentiellement partie du corps de la première pièce du guide optique et qui forme la zone d'injection, avec une pupille d'entrée par exemple de 4 mm.

La guide optique comporte une deuxième pièce qui sert de pièce de couverture. La deuxième pièce est constituée du même matériau transparent que la première pièce (même indice optique). La deuxième pièce est collée à la première pièce, de sorte que l'épaisseur du guide optique est constante (épaisseur de la première pièce, épaisseur de la deuxième pièce et épaisseur de colle). Après assemblage de la première pièce et de la deuxième pièce, le guide optique présente donc deux surfaces (faces) externes planes et parallèles entre elles. Une colle transparente est utilisée, avec un indice de réfraction sensiblement le même que celui du matériau transparent utilisé pour la première pièce du guide optique et du matériau transparent utilisé pour la deuxième pièce du guide optique.

Les microstructures de la deuxième pièce sont agencées pour prendre place dans des espaces entre les microstructures d'extraction de la première pièce.

Les microstructures de la deuxième pièce peuvent avoir des formes complémentaires à celles des microstructures de la première pièce, avec une épaisseur de colle substantiellement constante, comme selon le principe général divulgué dans le document de brevet WO 2012/136470 A1.

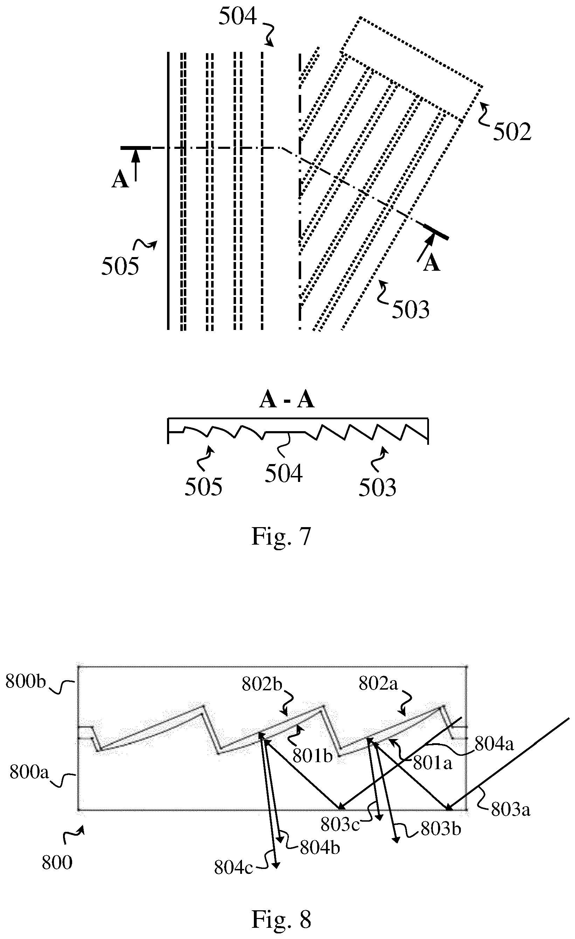

Lorsque la première pièce comporte un réseau de microstructures de multiplication bidimensionnelle de pupille, la deuxième pièce comporte en surface des microstructures qui sont, selon le même principe, géométriquement complémentaires à celles du réseau de microstructures de multiplication bidimensionnelle de pupille de la première pièce. Cet aspect est schématiquement illustré sur la **Fig. 7** avec la coupe A-A en vue simplifiée.

En variante de réalisation, les microstructures de la deuxième pièce ont des formes agencées pour permettre une seconde extraction d'image à une distance D' autre que la distance D. Comme la deuxième pièce est collée à la première pièce de sorte que l'épaisseur du guide optique est constante, cela signifie que l'épaisseur de colle n'est pas constante entre les microstructures d'extraction de la première pièce et celles de la deuxième pièce. Permettre de projeter une même image à des distances différentes (plans différents) rend la vision en réalité augmentée plus immersive, plus proche de celle de l'œil humain, qui a la possibilité de focaliser l'image à différentes distances en adaptant sa focale oculaire en temps réel.

Un agencement correspondant est schématiquement illustré sur la **Fig. 8,** où une projection à l'infini est réalisée par les microstructures complémentaires de la deuxième pièce (pièce de couverture) au niveau de la zone d'extraction.

Ainsi, dans un mode de réalisation particulier, la pièce de couverture 800b a aussi une fonction d'extraction d'image grâce aux microstructures qui prennent place dans les espaces entre les microstructures d'extraction de la première pièce 800a. Le guide optique 800 comporte ainsi une autre succession de microstructures d'extraction agencées pour projeter à une distance D', autre que la distance D, l'image injectée dans le guide optique. Les surfaces actives 802a, 802b de ces microstructures de la pièce de couverture sont aussi sphériques et sont munies d'un dépôt semi-réfléchissant (non représenté). Elles sont placées en regard des surfaces actives 801a, 801b des microstructures d'extraction de la première pièce 800a, mais sont différentes des surfaces actives 801a, 801b en regard desquelles elles sont placées.

Pour projeter l'image virtuelle à une distance D' du guide optique, les microstructures de la pièce de couverture ont une forme sphérique et sont agencées de telle sorte que les relations suivantes sont respectées :

$$R' = 2 * n * D'$$

$$\theta' = \arctan ( P / D' ) / ( 2 * n )$$

où R' est le rayon de courbure des surfaces actives sphériques 802a, 802b, et θ' représente l'écart d'inclinaison d'une surface active à l'autre (selon le même principe que pour les microstructures d'extraction de la première pièce 501a). Les surfaces actives des microstructures d'extraction de la pièce de couverture sont préférentiellement des surfaces convexes, c'est-à-dire en saillie en surface de la deuxième pièce du guide optique 400. Une projection à une distance négative pour compenser une hypermétropie est aussi réalisable en utilisant des surfaces concaves.

Ainsi, un rayon lumineux 803a transporté (image virtuelle) par le guide optique 800 jusqu'à la zone d'extraction vient frapper la surface active 801a. Le traitement semi-réfléchissant sur la surface active 801a entraîne qu'une partie 803b du rayon lumineux 803a est réfléchie et projetée hors du guide optique à la distance D. Une autre partie est transmise via la colle à la surface active 802a. Le traitement semi-réfléchissant sur la surface active 802a entraîne qu'une partie 803c du rayon lumineux est projetée hors du guide optique à la distance D'. De même, un rayon lumineux 804a (image virtuelle) transporté par le guide optique 800 jusqu'à la zone d'extraction vient frapper la surface active 801b. Le traitement semi-réfléchissant sur la surface active 801b entraîne qu'une partie 804b du rayon lumineux 804a est réfléchie et projetée hors du guide optique à la distance D. Une autre partie est transmise via la colle à la surface active 802b. Le traitement semi-réfléchissant sur la surface active 802b entraîne qu'une partie 803c du rayon lumineux est projetée hors du guide optique à la distance D'.

Les surfaces actives de ces microstructures de la pièce de couverture peuvent être agencées de sorte à projeter l'image à une distance infinie, comme illustré sur la Fig. 8. En d'autres termes, il n'y a pas ici de changement d'angle d'inclinaison d'une microstructure à l'autre. La différence de complémentarité des formes des microstructures mises en regard les unes des autres est ici aussi compensée par la colle de sorte que les faces externes du guide optique restent parallèles entre elles.

Les surfaces actives de ces microstructures de la pièce de couverture peuvent être agencées de sorte à projeter l'image à une distance finie.

Les surfaces actives 801a, 801b et les surfaces actives 802a, 802b peuvent disposer de dépôts semi-réfléchissants différents. Par exemple, le traitement appliqué aux surfaces actives des microstructures d'extraction de la première pièce est sélectif en polarisation spécifique (perpendiculaire ou parallèle au plan d'incidence) ou à une longueur d'onde spécifique ou à une bande spectrale spécifique, et le traitement appliqué aux surfaces actives des microstructures d'extraction de la première pièce est sélectif à une autre polarisation spécifique ou à une autre longueur d'onde spécifique ou à autre une bande spectrale spécifique (respectivement). Cela permet d'aisément projeter deux images distinctes à deux distances différentes, chaque image ayant alors ses propres caractéristiques de polarisation ou de longueur d'onde.

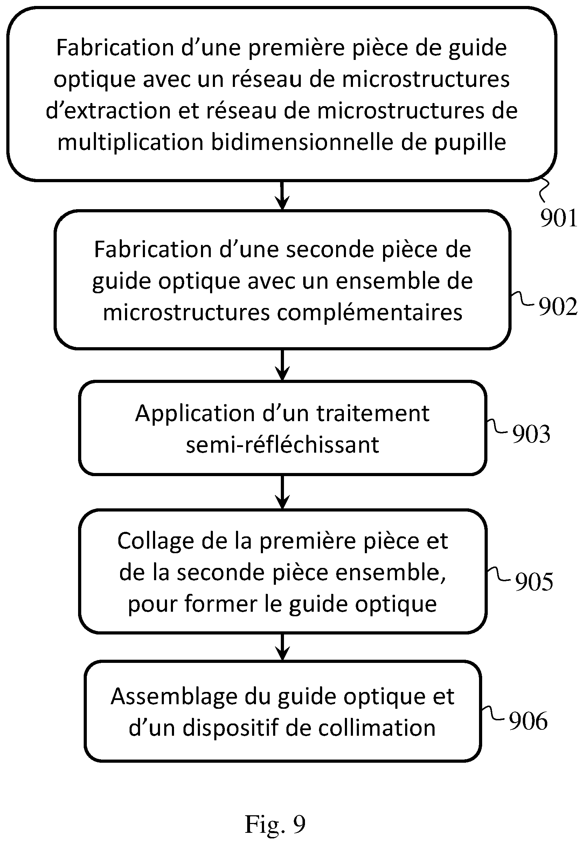

La **Fig. 9** illustre schématiquement des étapes de procédé de fabrication d'un guide optique comportant une première pièce et une deuxième pièce, comme déjà abordé ci-dessus.

Dans une étape 901, la première pièce est fabriquée, par exemple par usinage d'un bloc en plastique, en verre ou par procédé d'injection plastique, ou par moulage. La première pièce comporte un réseau de microstructures d'extraction, comme déjà décrit en détails. La première pièce comporte préférentiellement un réseau de microstructures de multiplication bidimensionnelle de pupille, comme déjà décrit aussi en détails, notamment vis-à-vis de la Fig. 5.

Dans une étape 902, la deuxième pièce est fabriquée, par exemple par usinage d'un bloc en plastique, en verre ou par procédé d'injection plastique, ou par moulage. La deuxième pièce comporte des microstructures en surface qui sont dimensionnées et agencées pour prendre ensuite place dans des espaces entre les microstructures d'extraction et entre les microstructures de multiplication bidimensionnelle de pupille de la première pièce.

Dans une étape 903, un traitement semi-réfléchissant (dépôt) est appliqué sur les surfaces actives des microstructures d'extraction de la première pièce et éventuellement sur celles de la deuxième pièce lorsque celles-ci permettent elles-mêmes l'extraction d'image à la distance D'. Les surfaces passives sont exclues de ce traitement semi-réfléchissant (dépôt).

Un traitement semi-réfléchissant (dépôt) est préférentiellement appliqué entre la zone d'injection par laquelle le dispositif de collimation devra injecter l'image virtuelle et le réseau de microstructures de multiplication bidimensionnelle de pupille, soit sur la première pièce, soit sur la deuxième pièce, de sorte qu'après collage, le traitement se trouve au milieu de l'épaisseur du guide optique.

De même, un traitement semi-réfléchissant (dépôt) est préférentiellement appliqué entre le réseau de microstructures de multiplication bidimensionnelle de pupille et le réseau de microstructures d'extraction, soit sur la première pièce, soit sur la deuxième pièce, de sorte qu'après collage, le traitement se trouve au milieu de l'épaisseur du guide optique.

Dans une étape 904, la première pièce fabriquée à l'étape 901 et la deuxième pièce fabriquée à l'étape 902 sont collées ensemble, les microstructures en surface de la première pièce étant collées en regard de leurs microstructures complémentaires en surface de la deuxième pièce, comme illustré sur la Fig. 7. Les indices de réfraction des matériaux utilisés pour fabriquer la première pièce et la deuxième pièce, et de la colle qui les assemble, sont sensiblement égaux afin d'assurer une continuité optique. Après assemblage de la première pièce et de la deuxième pièce, le guide optique présente donc deux surfaces (faces) externes planes et parallèles entre elles.

Ensuite, un dispositif optique peut être fabriqué en adjoignant un dispositif de collimation au guide optique dans une étape 906. Un assemblage du guide optique et du dispositif de collimation est ainsi effectué, de sorte que le dispositif de collimation injecte une image virtuelle, sous forme de faisceau collimaté à l'infini, par une zone d'injection du guide optique, et de sorte que cette image est transportée dans le guide optique par réflexions totales internes successives.

L'assemblage du guide optique et du dispositif de collimation peut ensuite être intégré, avec une source d'image lumineuse, dans un dispositif de réalité augmentée, tel que des lunettes informatives.

## Revendications

1. Guide optique (400,800) comportant une première pièce (800a) dans un matériau transparent, la première pièce comportant en surface un réseau de microstructures d'extraction composé d'une succession de microstructures d'extraction agencées pour projeter, à une distance finie D, une image virtuelle injectée dans le guide optique, chaque microstructure d'extraction ayant une forme prismatique à deux faces, une face étant appelée surface active (401a,401b,801a,801b) et disposant d'un dépôt semi-réfléchissant pour extraire l'image virtuelle du guide optique et l'autre face étant appelée surface passive et ne disposant d'aucun dépôt semi-réfléchissant, **caractérisé en ce que** chaque surface active est sphérique et a une inclinaison plus faible d'un angle moyen θ que l'éventuelle surface active immédiatement précédente dans la succession de microstructures selon la direction de propagation de l'image virtuelle dans le guide optique, **caractérisé en ce que** :

$$\theta = \arctan \left( P / D \right) / \left( 2 * n \right)$$

et chaque surface active a un rayon de courbure R tel que :

$$R = 2 * n * D$$

où P est une période de répétition des microstructures du réseau de microstructures d'extraction et $n$ est un indice de réfraction du matériau transparent.

2. Guide optique selon la revendication 1, comportant en outre une deuxième pièce (800b), dite pièce de couverture, dans le même matériau transparent que la première pièce, la deuxième pièce comportant des microstructures agencées pour prendre place dans des espaces entre les microstructures de la première pièce, la deuxième pièce étant collée à la première pièce de sorte à former un guide optique à deux faces parallèles.

3. Guide optique selon la revendication 2, dans lequel la deuxième pièce présente en surface des microstructures de formes complémentaires à celles des microstructures de la première pièce, avec une épaisseur de colle substantiellement constante.

4. Guide optique selon la revendication 2, dans lequel la deuxième pièce présente en surface des microstructures formant un autre réseau de microstructures d'extraction qui comporte une autre succession de microstructures d'extraction ayant des surfaces actives (802a,802b) disposant d'un dépôt semi-réfléchissant et agencées pour projeter l'image virtuelle à une distance D' autre que la distance D.

5. Guide optique selon la revendication 4, dans lequel la distance D' est finie et chaque surface active des microstructures de cet autre réseau de microstructures d'extraction est sphérique et a une inclinaison plus faible d'un angle moyen θ' que l'éventuelle surface active immédiatement précédente dans la succession de microstructures selon la direction de propagation de l'image virtuelle dans le guide optique.

6. Guide optique selon la revendication 4, dans lequel la distance D' est infinie.

7. Guide optique selon l'une quelconque des revendications 4 à 6, dans lequel :

   - le dépôt semi-réfléchissant des surfaces actives de la première pièce est sensible à une polarisation spécifique et le dépôt semi-réfléchissant des surfaces actives de la deuxième pièce est sensible à une autre polarisation spécifique ; ou
   - le dépôt semi-réfléchissant des surfaces actives de la première pièce est sensible à une longueur d'onde spécifique et le dépôt semi-réfléchissant des surfaces actives de la deuxième pièce est sensible à une autre longueur d'onde spécifique ; ou
   - le dépôt semi-réfléchissant des surfaces actives de la première pièce est sensible à une bande spectrale spécifique et le dépôt semi-réfléchissant des surfaces actives de la deuxième pièce est sensible à une autre bande spectrale spécifique.

8. Dispositif de projection d'images comportant un guide optique selon l'une quelconque des revendications 1 à 7 et un dispositif de collimation fournissant une image virtuelle collimatée à l'infini, le dispositif de collimation et le guide optique étant assemblés de sorte que l'image virtuelle fournie par le dispositif de collimation est injectée dans le guide optique et projetée à la distance D par le réseau de microstructures d'extraction.

9. Système de réalité augmentée comportant au moins un dispositif de projection d'images selon la revendication 8.

10. Procédé de fabrication d'un guide optique, comportant les étapes suivantes :

    - fabriquer une première pièce dans un matériau transparent, la première pièce comportant en surface un réseau de microstructures d'extraction composé d'une succession de microstructures d'extraction agencées pour projeter, à une distance finie D, une image virtuelle injectée dans le guide optique, chaque microstructure d'extraction ayant une forme prismatique à deux faces, une face étant appelée surface active pour extraire l'image virtuelle du guide optique et l'autre face étant appelée surface passive, chaque surface active étant sphérique et ayant une inclinaison plus faible d'un angle moyen θ que l'éventuelle surface active immédiatement précédente dans la succession de microstructures selon la direction de propagation de l'image virtuelle dans le guide optique ;
    - appliquer un traitement semi-réfléchissant sur les surface actives, en excluant les surfaces passives ;
    **caractérisé en ce que** le procédé de fabrication est tel que :

    $$\theta = \arctan\,(\,P\,/\,D\,)\,/\,(2*n)$$

    et chaque surface active a un rayon de courbure R tel que :

    $$R = 2*n*D$$

    où P est une période de répétition des microstructures du réseau de microstructures d'extraction et $n$ est un indice de réfraction du matériau transparent.

11. Procédé de fabrication selon la revendication 10, dans lequel la première pièce comporte en outre en surface un réseau de microstructures de multiplication bidimensionnelle de pupille placé entre une zone d'injection par laquelle l'image virtuelle à projeter est injectée dans le guide optique et le réseau de microstructures d'extraction, les microstructures de multiplication bidimensionnelle de pupille comportant des surfaces actives sous forme de plans inclinés et les autres surfaces étant des surfaces passives, les microstructures de multiplication bidimensionnelle de pupille étant placées en oblique par rapport aux microstructures d'extraction de sorte à réfléchir un rayon lumineux de l'image virtuelle transportée qui frappe une ou plusieurs de ses surfaces actives vers le réseau de microstructures d'extraction ;

et le procédé comporte en outre l'étape suivante :

- appliquer un traitement semi-réfléchissant sur les surfaces actives des microstructures de multiplication bidimensionnelle de pupille, en excluant les surfaces passives.

12. Procédé de fabrication selon la revendication 10 ou 11, comportant en outre les étapes suivantes :

- fabriquer une deuxième pièce, dite pièce de couverture, dans le même matériau transparent que la première pièce, la deuxième pièce comportant des microstructures agencées pour prendre place dans des espaces entre les microstructures de la première pièce ;
- coller la première pièce et la deuxième pièce ensemble de sorte à former un guide optique à deux faces parallèles.

**Patentansprüche**

1. Optischer Leiter (400, 800), der ein erstes Teil (800a) aus einem transparenten Material beinhaltet, wobei das erste Teil an der Oberfläche ein Netzwerk aus Extraktionsmikrostrukturen aufweist, das aus einer Aufeinanderfolge von Extraktionsmikrostrukturen zusammengesetzt ist, die dafür angeordnet sind, in einem endlichen Abstand D ein virtuelles Bild zu projizieren, das in den optischen Leiter injiziert wird, wobei jede Extraktionsmikrostruktur eine zweiseitige Prismenform aufweist, wobei eine Seite aktive Fläche (401a, 401b, 801a, 801b) genannt wird und über eine halbreflektierende Ablagerung verfügt, um das virtuelle Bild aus dem optischen Leiter zu extrahieren, und die andere Seite passive Fläche genannt wird und über keine halbreflektierende Ablagerung verfügt, **dadurch gekennzeichnet, dass** jede aktive Fläche sphärisch ist und eine Neigung aufweist, die um einen durchschnittlichen Winkel θ geringer ist als die eventuelle aktive Fläche, die in der Aufeinanderfolge von Extraktionsmikrostrukturen in der Ausbreitungsrichtung des virtuellen Bildes im optischen Leiter unmittelbar vorangeht, **dadurch gekennzeichnet, dass**:

$$\theta = \arctan ( P / D ) / (2 * n)$$

und jede aktive Fläche einen Krümmungsradius R aufweist, so dass:

$$R = 2 * n * D$$

wobei P eine Wiederholungsperiode der Mikrostrukturen des Netzwerks aus Extraktionsmikrostrukturen und n ein Brechungsindex des transparenten Materials ist.

2. Optischer Leiter nach Anspruch 1, der ferner ein zweites Teil (800b), Abdeckteil genannt, aus dem gleichen transparenten Material wie das erste Teil beinhaltet, wobei das zweite Teil Mikrostrukturen beinhaltet, die dafür angeordnet sind, in Räumen zwischen den Mikrostrukturen des ersten Teils Platz zu finden, wobei das zweite Teil so an das erste Teil geklebt ist, dass ein optischer Leiter mit zwei parallelen Seiten gebildet wird.

3. Optischer Leiter nach Anspruch 2, wobei das zweite Teil an der Oberfläche Mikrostrukturen mit Formen aufweist, die zu jenen der Mikrostrukturen des ersten Teils komplementär sind, mit einer im Wesentlichen konstanten Klebstoffdicke.

4. Optischer Leiter nach Anspruch 2, wobei das zweite Teil an der Oberfläche Mikrostrukturen aufweist, die ein anderes Netzwerk aus Extraktionsmikrostrukturen bilden, das eine andere Aufeinanderfolge von Extraktionsmikrostrukturen mit aktiven Flächen (802a, 802b) beinhaltet, die über eine halbreflektierende Ablagerung verfügen und die dafür angeordnet sind, das virtuelle Bild in einem Abstand D' zu projizieren, der sich von dem Abstand D unterscheidet.

5. Optischer Leiter nach Anspruch 4, wobei der Abstand D' endlich ist und jede aktive Fläche der Mikrostrukturen dieses anderen Netzwerks aus Extraktionsmikrostrukturen sphärisch ist und eine Neigung aufweist, die um einen durchschnittlichen Winkel θ' geringer ist als die eventuelle aktive Fläche, die in der Aufeinanderfolge von Extraktionsmikrostrukturen in der Ausbreitungsrichtung des virtuellen Bildes im optischen Leiter unmittelbar vorangeht.

6. Optischer Leiter nach Anspruch 4, wobei der Abstand D' unendlich ist.

7. Optischer Leiter nach einem der Ansprüche 4 bis 6, wobei

- die halbreflektierende Ablagerung der aktiven Flächen des ersten Teils auf eine spezifische Polarisation anspricht und die halbreflektierende Ablagerung der aktiven Flächen des zweiten Teils auf eine andere spezifische Polarisation anspricht; oder

- die halbreflektierende Ablagerung der aktiven Flächen des ersten Teils auf eine spezifische Wellenlänge anspricht und die halbreflektierende Ablagerung der aktiven Flächen des zweiten Teils auf eine andere spezifische Wellenlänge anspricht; oder

- die halbreflektierende Ablagerung der aktiven Flächen des ersten Teils auf ein spezifisches Spektralband anspricht und die halbreflektierende Ablagerung der aktiven Flächen des zweiten Teils auf ein anderes spezifisches Spektralband anspricht.

8. Bildprojektionsvorrichtung, die einen optischen Leiter nach einem der Ansprüche 1 bis 7 und eine Kollimationsvorrichtung, die ein auf unendlich kollimiertes virtuelles Bild bereitstellt, beinhaltet, wobei die Kollimationsvorrichtung und der optische Leiter so zusammengesetzt sind, dass das virtuelle Bild, das von der Kollimationsvorrichtung bereitgestellt wird, in den optischen Leiter injiziert und im Abstand D von dem Netzwerk aus Extraktionsmikrostrukturen projiziert wird.

9. System für erweiterte Realität, das wenigstens eine Bildprojektionsvorrichtung nach Anspruch 8 beinhaltet.

10. Verfahren zur Herstellung eines optischen Leiters, das die folgenden Schritte beinhaltet

- Herstellen eines ersten Teils aus einem transparenten Material, wobei das erste Teil an der Oberfläche ein Netzwerk aus Extraktionsmikrostrukturen aufweist, das aus einer Aufeinanderfolge von Extraktionsmikrostrukturen zusammengesetzt ist, die dafür angeordnet sind, in einem endlichen Abstand D ein virtuelles Bild zu projizieren, das in den optischen Leiter injiziert wird, wobei jede Extraktionsmikrostruktur eine zweiseitige Prismenform aufweist, wobei eine Seite aktive Fläche genannt wird, um das virtuelle Bild aus dem optischen Leiter zu extrahieren, und die andere Seite passive Fläche genannt wird, wobei jede aktive Fläche sphärisch ist und eine Neigung aufweist, die um einen durchschnittlichen Winkel θ geringer ist als die eventuelle aktive Fläche, die in der Aufeinanderfolge von Extraktionsmikrostrukturen in der Ausbreitungsrichtung des virtuellen Bildes im optischen Leiter unmittelbar vorangeht, - Anwenden einer halbreflektierenden Behandlung auf die aktiven Flächen unter Ausschluss der passiven Flächen;

**dadurch gekennzeichnet, dass** das Herstellungsverfahren so geartet ist, dass:

$$\theta = \arctan ( P / D ) / (2 * n)$$

und jede aktive Fläche einen Krümmungsradius R aufweist, so dass

$$R = 2 * n * D$$

wobei P eine Wiederholungsperiode der Mikrostrukturen des Netzwerks aus Extraktionsmikrostrukturen und n ein Brechungsindex des transparenten Materials ist.

11. Herstellungsverfahren nach Anspruch 10, wobei das erste Teil ferner an der Oberfläche ein Netzwerk aus Mikrostrukturen zur zweidimensionalen Pupillenvervielfältigung beinhaltet, das zwischen einem Injektionsbereich, durch welchen das zu projizierende virtuelle Bild in den optischen Leiter injiziert wird, und dem Netzwerk aus Extraktionsmikrostrukturen platziert ist, wobei die Mikrostrukturen zur zweidimensionalen Pupillenvervielfältigung aktive Flächen in Form von geneigten Ebenen beinhalten und die anderen Flächen passive Flächen sind, wobei die Mikrostrukturen zur zweidimensionalen Pupillenvervielfältigung schräg im Verhältnis zu den Extraktionsmikrostrukturen platziert sind, um einen Lichtstrahl des transportierten virtuellen Bildes, der auf eine oder mehrere ihrer aktiven Flächen trifft, in Richtung des Netzwerks aus Extraktionsmikrostrukturen zu reflektieren, und das Verfahren ferner den folgenden Schritt beinhaltet

- Anwenden einer halbreflektierenden Behandlung auf die aktiven Flächen der Mikrostrukturen zur zweidimensionalen Pupillenvervielfältigung, unter Ausschluss der passiven Flächen.

12. Herstellungsverfahren nach Anspruch 10 oder 11, das ferner die folgenden Schritte beinhaltet

- Herstellen eines zweiten Teils, Abdeckteil genannt, aus dem gleichen transparenten Material wie das erste Teil, wobei das zweite Teil Mikrostrukturen beinhaltet, die dafür angeordnet sind, in Räumen zwischen den Mikrostrukturen des ersten Teils Platz zu finden, - Verkleben des ersten Teils und des zweiten Teils, um einen optischen Leiter mit zwei parallelen Seiten zu bilden.

## Claims

1. Optical guide (400, 800) comprising a first piece (800a) in a transparent material, the first piece comprising on the surface an array of extraction microstructures composed of a succession of extraction microstructures arranged to project, at a finite distance D, a virtual image injected into the optical guide, each extraction microstructure having a prismatic shape with two faces, one face being called active surface (401a, 401b, 801a, 801b) and having a semi-reflective deposit for extracting the virtual image from the optical guide and the other face being called passive surface and not having any semi-reflective deposit, **characterised in that** each active surface is spherical and has a smaller inclination by a mean angle θ than any active surface immediately preceding in the succession of microstructures in the propagation direction of the virtual image in the optical guide, **characterised in that**:

$$\Theta = \arctan{(P/D)}/(2*n)$$

and each active surface has a radius of curvature R such that:

$$R = 2*n*D$$

where P is a repetition period of the microstructures in the array of extraction microstructures and $n$ is a refractive index of the transparent material.

2. Optical guide according to claim 1, further comprising a second piece (800b), referred to as a covering piece, in the same transparent material as the first piece, the second piece comprising microstructures arranged to fit in spaces between the microstructures of the first piece, the second piece being glued to the first piece so as to form an optical guide with two parallel faces.

3. Optical guide according to claim 2, wherein the second piece has on the surface microstructures with forms complementary to those of the microstructures of the first piece, with a substantially constant thickness of glue.

4. Optical guide according to claim 2, wherein the second piece has on the surface microstructures forming another array of extraction microstructures that comprises another succession of extraction microstructures having active surfaces (102a, 102b) having a semi-reflective deposit and arranged to project the virtual image at a distance D' other than the distance D.

5. Optical guide according to claim 4, wherein the distance D' is finite and each active surface of the microstructures of this other array of extraction microstructures is spherical and has a smaller inclination by a mean angle θ' than any active surface immediately preceding in the succession of microstructures in the propagation direction of the virtual image in the optical guide.

6. Optical guide according to claim 4, wherein the distance D' is infinite.

7. Optical guide according to any one of claims 4 to 6, wherein:

    - the semi-reflective deposit on the active surfaces of the first piece is sensitive to a specific polarisation and the semi-reflective deposit on the active surfaces of the second piece is sensitive to another specific polarisation; or
    - the semi-reflective deposit on the active surfaces of the first piece is sensitive to a specific wavelength and the semi-reflective deposit on the active surfaces of the second piece is sensitive to another specific wavelength; or
    - the semi-reflective deposit on the active surfaces of the first piece is sensitive to a specific spectral band and the semi-reflective deposit on the active surfaces of the second piece is sensitive to another specific spectral band.

8. Image-projection device comprising an optical guide according to any one of claims 1 to 7 and a collimation device supplying a virtual image collimated to infinity, the collimation device and the optical guide being assembled so that the virtual image supplied by the collimation device is injected into the optical guide and projected at the distance D by the array of extraction microstructures.

9. Augmented reality system comprising at least one image-projection device according to claim 8.

10. Method for manufacturing an optical guide, comprising the following steps:

    - manufacturing a first piece from a transparent material, the first piece comprising on the surface an array of extraction microstructures composed of a succession of extraction microstructures arranged to project, at a finite distance D, a virtual image injected into the optical guide, each extraction microstructure having a prismatic shape with two faces, one face being called active surface for extracting the virtual image from the optical guide and the other face being called passive surface, each active surface being spherical and having a smaller inclination by a mean angle θ than any active surface immediately preceding in the succession of microstructures in the propagation direction of the virtual image in the optical guide;
- applying a semi-reflective treatment on the active surfaces, excluding the passive surfaces; **characterised in that** the manufacturing method is such that

$$\Theta = \arctan (P/D)/(2*n)$$

and each active surface has a radius of curvature R such that:

$$R = 2*n*D$$

where P is a repetition period of the microstructures in the array of extraction microstructures and $n$ is a refractive index of the transparent material.

11. Manufacturing method according to claim 10, wherein the first piece further comprises on the surface a array of two-dimensional pupil multiplication microstructures placed between an injection zone via which the virtual image to be projected is injected into the optical guide and the array of extraction microstructures, the two-dimensional pupil multiplication microstructures comprising active surfaces in the form of inclined planes and the other surfaces being passive surfaces, the two-dimensional pupil multiplication microstructures being placed obliquely with respect to the extraction microstructures so as to reflect a light ray from the transported virtual image that strikes one or more of its active surfaces towards the array of extraction microstructure;
and the method further comprises the following step:

- applying a semi-reflective treatment on the active surfaces of the two-dimensional pupil multiplication microstructures, excluding the passive surfaces.

12. Manufacturing method according to claim 10 or 11, further comprising the following steps:

- manufacturing a second piece, referred to as a covering piece, from the same transparent material as the first piece, the second piece comprising microstructures arranged to fit in spaces between the microstructures of the first piece;
- glueing the first piece and the second piece together so as to form an optical guide with two parallel faces.

101
103 102

Fig. 1

100

210
200

203
201
202
204
205
101
100

Fig. 2

Fig. 3

Fig. 4

501

504

502

505

503

Fig. 5

602

601

600

503

505

Fig. 6

504

502

A

505

503

A

**A - A**

505    504    503

Fig. 7

800b

802b    802a

804a

800a    801b    801a

800    803c    804b

804c    803b    803a

Fig. 8

Fabrication d'une première pièce de guide optique avec un réseau de microstructures d'extraction et réseau de microstructures de multiplication bidimensionnelle de pupille

901

Fabrication d'une seconde pièce de guide optique avec un ensemble de microstructures complémentaires

902

Application d'un traitement semi-réfléchissant

903

Collage de la première pièce et de la seconde pièce ensemble, pour former le guide optique

905

Assemblage du guide optique et d'un dispositif de collimation

906

Fig. 9

**EP 4 067 950 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009074638 A1
- US 20160313557 A1
- US 2012002294 A1
- WO 2012136470 A1
- EP 2791717 B1